# EUROPÄISCHE PATENTSCHRIFT

(11) **EP 3 181 780 B1**
(45) Veröffentlichungstag und Bekanntmachung des Hinweises auf die Patenterteilung: **07.06.2023**
(21) Anmeldenummer: 16201471.6
(22) Anmeldetag: 30.11.2016
(51) Int. Cl.: E04F 17/08, E01C 11/22, H02G 3/04, H02G 3/38, H02G 9/04, H02G 9/06

(54) **VERSORGUNGSRINNE**
SUPPLY CHANNEL
GOULOTTE D'ALIMENTATION

(30) Priorität: 18.12.2015 DE 202015106925 U
(43) Veröffentlichungstag der Anmeldung: 21.06.2017
(73) Patentinhaber: Richard Brink GmbH & Co. KG, 33758 Schloss Holte-Stukenbrock (DE)
(72) Erfinder: BRINK, Stefan, 33758 Schloß Holte-Stukenbrock (DE)
(74) Vertreter: Dantz, Jan Henning

(56) Entgegenhaltungen:
- DE-A1- 4 307 260
- DE-A1- 19 643 850
- DE-B3-102004 026 302
- DE-U1-202013 005 554
- FR-A- 1 340 379
- GB-A- 2 015 268
- KR-B1- 100 926 650
- KR-B1- 100 952 127
- NL-A- 6 409 567
- US-A- 3 770 875

## Beschreibung

Die Erfindung betrifft eine Versorgungsrinne, mit einem einen Kanal im Querschnitt dreiseitig begrenzenden Rinnenkörper und einer den Kanal überdeckenden Abdeckung.

Derartige Versorgungsrinnen finden für unterschiedlichste Anwendungsbereiche Verwendung. Beispielhaft sei die Verlegung bzw Führung von Versorgungsleitungen oder Kabeln genannt, die außerhäusig zu verlegen sind.

Üblicherweise wird eine solche Versorgungsrinne mit ihrem Rinnenkörper einbetoniert, während die Abdeckung, als Rost oder Platte im Wesentlichen bündig mit dem benachbarten Oberflächenbereich verläuft.

Die Befestigung der Versorgungsrinne muss so gesichert sein, dass sie auch von Fahrzeugen, insbesondere schweren Nutzfahrzeugen, überfahren werden kann.

Um hierfür ein ausreichendes Fundament zu schaffen, ist die Versorgungsrinne in ein Betonbett eingefügt, das unterseitig als sogenannte Voute ausgebildet ist, wodurch eine ausreichende Abstützung erreicht wird.

Allerdings ist diese Art Fundament, das im Querschnitt etwa trapezförmig gestaltet ist, nur mit einem erheblichen Aufwand herstellbar, da zunächst diese Voute gegossen werden muss, bevor die Versorgungsrinne eingesetzt werden kann.

Wie erwähnt, ist dies nur mit einem erheblichen Zeitaufwand möglich, aus dem sich inakzeptable Kostennachteile ergeben, wobei überdies für die Herstellung der Voute eine Verschalung erforderlich ist, um das Fundament so herzurichten, dass ein weitgehend maßgenauer Einsatz des Rinnenkörpers möglich ist.

Ein weiterer, deutlicher Nachteil der bekannten Versorgungsrinne besteht darin, dass nach deren Einbau zum benachbarten Betonbett eine Dehnungsfuge eingebracht werden muss, um ein Schrumpfmaß des Betons bei dessen Austrocknen auszugleichen. Ansonsten würde die mit dem Betonbett verbundene Versorgungsrinne derart beschädigt, d.h. verbogen, dass ihre Funktion nicht mit Sicherheit gewährleistet ist.

Solche Dehnungsfugen werden beispielsweise durch Schlitzen des Betonbettes in Längsrichtung der Versorgungsrinne, bevorzugt beidseitig hergestellt und anschließend mit einer elastischen Masse ausgefüllt.

Auch andere Möglichkeiten solche Dehnungsfugen vorzusehen, sind bekannt, z.B. vorgefertigte elastische Streifen, die an geeigneter Stelle vor der Herstellung des Betonbetts zu installieren sind.

In jedem Fall ist das Einbringen der Dehnungsfugen mit einem erheblichen Arbeits- und damit Kostenaufwand verbunden, wobei, aufgrund der geringeren Belastbarkeit gegenüber dem Beton bzw. der Versorgungsrinne die Dehnungsfugen sozusagen eine Schwachstelle bilden.

In der DE 43 07 260 A1 ist eine Versorgungsinne entsprechend der Gattung offenbart.

In der DE 10 2005 003 384 A1, der DE 20 2005 001 609 U1 sowie der DE 20 2013 005 554 U1 sind jeweils, von der Gattung abweichend, Entwässerungsrinnen thematisiert, zur Abführung von Oberflächenwasser, wobei der Boden des Rinnenkörpers dicht sein muss, um das eingedrungene Oberflächenwasser abführen zu können.

Aus der US 3 770 875 A ist ein Kabelkanal bekannt, der ein U-förmiges Oberteil und ein U-förmiges Unterteil aufweist, zwischen denen ein Kanal gebildet ist, in dem Kabel geführt sind.

Gleichfalls ein Kabelkanal, also eine Versorgungsrinne, ist in der NL 6 409 567 A gezeigt, wobei dieser Kabelkanal einen durch eine Abdeckung überdeckten einstückigen Rinnenkörper aufweist, der durch Zwischenwände, die sich in Längsrichtung erstrecken, in Kabelkammern unterteilt ist.

Eine Versorgungsrinne ist des Weiteren in der DE 10 2004 026302 B32 gezeigt und beschrieben, wobei ein einstückiger, einen Kanal im Querschnitt dreiseitig begrenzender Rinnenkörper mit einer den Kanal überdeckenden Abdeckung versehen ist.

Abweichend von der Gattung ist in der KR 100 926 650 B1 eine Kabelschutzeinrichtung offenbart, bei der die vier Seitenwände aus geschäumten und mit einer Vielzahl von Schlitzen versehenen, mit Abstand zueinander angeordneten Gummimatten bestehen, die durch kreuzförmige Elemente miteinander verbunden sind, wobei in dieser Kabelschutzeinrichtung Kabel, Gas- oder Wasserleitungen geführt sind.

GB 2 015 268 A offenbart ein elektrisches Verteilungssystem umfasst ein Netzwerk aus kabeltragenden Kanälen oder Leitungen 10 mit einer Reihe von offenen Abschnitten, die über das Netzwerk verteilt sind, wobei in jedem der offenen Abschnitte Steckdoseneinheiten vorgesehen sind, um Zugang zu einem oder mehreren elektrischen Diensten bereitzustellen. Jede der Auslasseinheiten umfasst ein Gitter 30 , das angepasst ist, um in einem offenen Abschnitt eines Kabelkanals oder einer Leitung montiert zu werden, einen Verkleidungsrahmen 35 , der teleskopartig in das Gitter passt, und einen mit Deckel versehenen Auslasskasten 40 , der in den Verkleidungsrahmen passt und auf dem Gitter gestützt wird, wobei Schrauben vorgesehen sind, um eine Einstellung der Höhe des Abgangskastens in Bezug auf das Gitter zu ermöglichen.

Der Erfindung liegt die Aufgabe zugrunde, eine Versorgungsrinne der gattungsgemäßen Art so weiterzuentwickeln, dass sie mit konstruktiv einfachen Mitteln einfacher einbaubar ist, so dass die Montagekosten gesenkt werden. Diese Aufgabe wird durch eine Versorgungsrinne mit den Merkmalen des Anspruchs 1 gelöst.

Durch diese konstruktive Ausgestaltung wird die Montage der Versorgungsrinne deutlich vereinfacht und entsprechend kostengünstiger, da auf nachträgliche Arbeiten, wie das besagte Schlitzen des Betonbettes, verzichtet werden kann. Dabei sind die stofflich getrennten Körperteile des Rinnenkörpers derart miteinander verbunden, dass sie zwar eine Baueinheit bilden zum leichteren Transport und zur leichteren Montage, d.h. zum leichteren Einsetzen, jedoch quer zur Längserstreckung mit so viel Spiel, dass sie ein Schrumpfen des Betonbettes problemlos ausgleichen, durch entsprechende relative seitliche Bewegung.

Bevorzugt sind zur Verbindung der Körperteile abgewinkelte Laschen am Grund der Versorgungsrinne vorgesehen, durch die Verbindungsschrauben geführt sind, wobei diese zunächst zum Transport der Versorgungsrinne zur Baustelle und zur Montage die Körperteile miteinander fest verbunden sind und nach der Montage bzw. nach der Herstellung des Betonbettes gelöst werden, so dass die Körperteile gegengerichtet seitlich beweglich sind.

Nach einem weiteren Gedanken der Erfindung ist am Grund der Versorgungsrinne eine sich in Längsrichtung erstreckende Leiste angeordnet, die nach au-ßen über den Grund vorsteht und in montierter Stellung bis zu einer Unterlage reicht, auf der das Betonbett aufliegt, auf dem sich die Versorgungsrinne abstützt. D.h., das Betonbett wird in diesem Bereich durch die Leiste getrennt, die insoweit gleichfalls die Funktion einer Dehnungsfuge übernimmt.

Bevorzugt ist die Leiste zwischen den beiden Laschen angeordnet, durch die die Verbindungsschrauben geführt sind, wobei die Leiste zur Montage bzw. zum Einbau der Versorgungsrinne zwischen den Laschen eingeklemmt ist.

Weiterhin ist die Versorgungsrinne, entsprechend einem weiteren Gedanken der Erfindung mit an den sich gegenüberliegenden Außenseiten des Rinnenkörpers abgewinkelt befestigten Ankerlaschen versehen, die einwirkende Kräfte aufnehmen, so dass ein unterseitiges, druckartiges Fundament in vorbereitender Arbeit nicht geschaffen werden muss.

Nach einer vorteilhaften Weiterbildung der Erfindung sind am Rinnenkörper und/oder den Ankerlaschen Abstandshalter angeordnet, die in eingebauter Stellung der Versorgungsrinnen vertikal ausgerichtet sind und der Abstützung des Rinnenkörpers auf einem bauseitig vorbereiteten Unterbau, beispielsweise einem Schotterbett, dienen, wobei diese Abstandshalter bevorzugt mit an den den Ankerlaschen gegenüberliegenden freien Enden angeordneten Flanschen versehen sind, die eine Standfläche bilden.

Die Abstandshalter können so mit den Ankerlaschen und/oder dem Rinnenkörper verbunden sein, dass eine Höhenverstellung möglich ist, beispielsweise mittels Verstellschrauben, um eine waagerechte Nivellierung der Versorgungsrinne zu erreichen.

Die Ankerlaschen können des Weiteren mit dem Rinnenkörper stoff- oder formschlüssig verbunden sein, wobei als Stoffschluss bevorzugt Schweißen oder Löten zu nennen ist, während ein Formschluss durch eine Verschraubung, eine Verrastung oder dergleichen erreicht wird.

Bevorzugt ist die Versorgungsrinne, d.h. sind der Rinnenkörper sowie die Ankerlaschen aus Blech hergestellt, ebenso wie die erwähnte Leiste.

Zur Aufnahme der Abdeckung, die den gebildeten Kanal des Rinnenkörpers überdeckt, sind die Seitenwände des Rinnenkörpers an den freien Kantenbereichen derart geformt, dass sich jeweils eine Abstufung ergibt, auf denen die Abdeckung aufliegt.

Dabei kann jede Abstufung an ihrem freien Ende mit einem abgewinkelten Schenkel versehen sein, der sich parallel zur Abdeckung erstreckt in die dieser abgewandten Richtung, wobei dieser Schenkel mit der Abdeckung fluchtet. Diese Schenkel dienen der Überdeckung der Ankerlaschen in dem die Flurseite bildenden Beton.

Weitere vorteilhafte Ausbildungen der Erfindung sind in den Unteransprüchen gekennzeichnet.

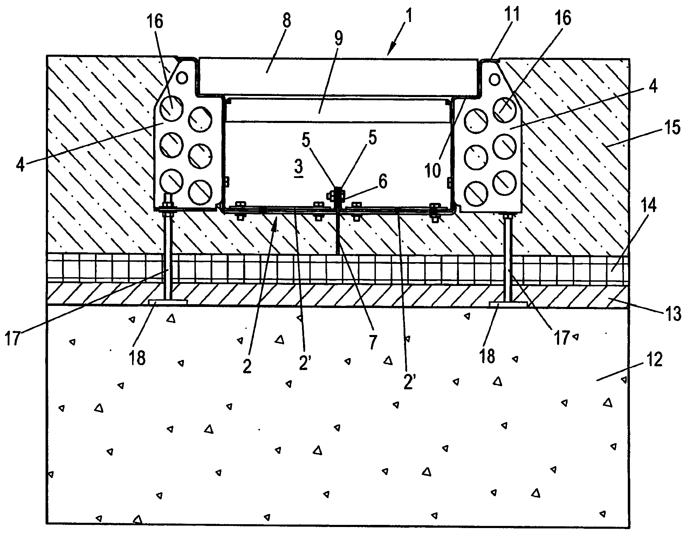

Ein Ausführungsbeispiel der Erfindung wird nachfolgend anhand der beigefügten Zeichnung beschrieben.

Die einzige Figur zeigt eine montierte Versorgungsrinne 1 in einem Querschnitt.

In der einzigen Figur ist eine Versorgungsrinne 1 erkennbar, mit einem einen Kanal 3 im Querschnitt dreiseitig begrenzenden Rinnenkörper 2 und einer den Kanal 3 überdeckenden Abdeckung 8.

Erfindungsgemäß besteht der Rinnenkörper 2 aus mehreren, im Beispiel zwei sich in Längsrichtung erstreckenden getrennten Körperteilen 2', die identisch ausgebildet sind. Statt zwei Körperteilen 2' kann der Rinnenkörper 2 auch aus zusätzlichen weiteren Körperteilen bestehen oder, abweichend von der identischen Ausbildung der beiden Körperteile 2' unterschiedlich im Querschnitt ausgebildet sein.

Am Grund des Kanals 3 sind an den Körperteilen 2' jeweils zum Kanal 3 hin nach innen gerichtete Laschen 5 abgewinkelt, durch die Verbindungsschrauben 6 geführt sind.

Zwischen den Laschen 5 ist eine Leiste 7 angeordnet, die sich über die gesamte Länge des Rinnenkörpers 2 erstreckt und gegenüber dem Kanal 3 nach au-ßen, vertikal ausgerichtet, vorsteht.

Durch die Leiste 7, die ebenso wie die Körperteile 2' aus Blech geformt ist, sind die Verbindungsschrauben 6 geführt.

An den sich gegenüberliegenden, parallel und abständig zueinander angeordneten Außenseiten des Rinnenkörpers 2 sind abgewinkelt Ankerlaschen 4 befestigt, im Beispiel durch Verschrauben. Denkbar aber auch durch Verschwei-ßen oder durch Verrasten, Verhaken oder dergleichen Formschluss.

Je nach Erfordernis können jeweils eine Mehrzahl abständig zueinander angeordnete Ankerlaschen 4 vorgesehen sein, wobei zumindest zwei jeder Seite mit Abstandshaltern 17 versehen sind, die im Beispiel stangenförmig ausgebildet sind und sich in die der Abdeckung 8 abgewandte Richtung erstrecken.

An ihrem freien Ende sind die jeweiligen Abstandshalter 17 mit einem Flansch 18 versehen, der eine Stützfläche bildet, wobei zumindest der oder die Abstandshalter 17 einer Seite in ihrer Höhe verstellbar sind, um eine waagegenaue Ausrichtung zu ermöglichen.

Hierzu ist der in der Figur linksseitige Abstandshalter 17 an seinem dem Flansch 18 abgewandten Endbereich mit einem Außengewinde versehen, auf das Muttern aufgedreht sind, von denen eine an der Oberseite eines Winkelschenkels der Ankerlasche 4 anliegt, während die andere Mutter eine Abstützung für diesen abgewinkelten Schenkel bildet, so dass eine Höhenverstellung der Versorgungsrinne 1 an dieser Seite möglich ist. Denkbar ist auch, ergänzend die gegenüberliegende Seite mit verstellbaren Abstandshaltern 17 zu versehen. Bevorzugt ist eine der beiden Muttern als Blindnietmutter ausgebildet.

Zur Auflage der Abdeckung 8 sind die Seitenwände des Rinnenkörpers 2 als Abstufung 10 ausgebildet, so dass sich eine Auflagefläche für die Abdeckung 8 bildet, wobei sich diese Auflagefläche nach außen, d.h. in die dem Kanal 3 entgegengesetzte Richtung erstreckt.

Das freie Ende der Abstufung 10 ist mit einem abgewinkelten Schenkel 11 versehen, der parallel zur Auflagefläche der Abstufung 10 verläuft und mit der Oberseite der Abdeckung 8 fluchtet, unter Überdeckung der bis dahin geführten Ankerlasche 4.

In der Figur ist die Versorgungsrinne 1 in installierter Stellung abgebildet. Zur Installation wird die vormontierte Versorgungsrinne 1, die insoweit bereits mit sämtlichen Bauteilen versehen ist, auf ein bauseits vorbereitetes Schotterbett 12 aufgesetzt und durch Verstellung der Abstandshalter 17 in Waage bzw. auf ein gewünschtes Niveau gebracht. Dabei steht die Versorgungsrinne 1 mit den an den Abstandshaltern 17 angeschlossenen Flanschen 18 auf dem Schotterbett 12 auf.

Eine folgende Schicht besteht aus Magerbeton 13, auf die eine Isolierung 14 aufgebracht ist, die den Untergrund für eine Betonlage 15 bildet, die die Versorgungsrinne 1 außenseitig umgibt, wobei die Ankerlaschen 4 mit Durchbrüchen 16 versehen sind, durch die der Beton vor dem Aushärten dringt, so dass eine feste Verbindung zwischen dem Beton und den Ankerlaschen 4 hergestellt ist.

Die Leiste 7 trennt die Betonlage 15 bis hin zur Isolierung 14, so dass die Leiste 7 eine Dehnungsfuge in der Betonlage 15 ausbildet.

Vorzugsweise mehrere Querriegel 9, die die beiden sich gegenüberliegenden Seitenwände des Kanals 3 miteinander verbinden, dienen der Formstabilisierung der Versorgungsrinne 1 während der Installation, so dass die Riegel praktisch ein Widerlager bilden für die beidseitig andrückende Betonlage 15.

Die Riegel 9 können, wie im Beispiel, im Kanal 3 angeordnet sein und zwar bevorzugt in dem der Abdeckung 8 zugewandten Bereich. Denkbar ist aber auch, die Riegel 9 in dem Bereich anzuordnen, in dem die Abdeckung 8 positioniert ist, wobei die Riegel 9 nach der Installation, d.h. nach einem Aushärten der Betonlage 15, entnommen werden, während sie in der dargestellten Position, also unterhalb der Abdeckung 8 verbleiben können.

## Patentansprüche

1. Versorgungsrinne, mit einem einen Kanal (3) im Querschnitt dreiseitig begrenzenden Rinnenkörper (2) und einer den Kanal (3) überdeckenden Abdeckung (8), **dadurch gekennzeichnet, dass** der Rinnenkörper (2) aus mindestens zwei nebeneinander liegenden, sich in Längsrichtung erstreckenden, getrennten Körperteilen (2') besteht, die durch Verbindungselemente derart lösbar miteinander verbunden sind, dass durch relative seitliche Bewegungen zueinander ein Spiel zum Ausgleich eines Schrumpfens eines Betonbettes gebildet ist, in das der Rinnenkörper (2) eingesetzt ist, wobei an den sich gegenüberliegenden Außenseiten des Rinnenkörpers (2) abgewinkelt Ankerlaschen (4) befestigt sind.

2. Versorgungsrinne nach Anspruch 1, **dadurch gekennzeichnet, dass** die zwei Körperteile (2') identisch ausgebildet sind.

3. Versorgungsrinne nach Anspruch 1 oder 2, **dadurch gekennzeichnet, dass** die Körperteile (2') zum Kanal (3) hin abgewinkelte, einander benachbarte Laschen (5) aufweisen, an denen die Verbindungselemente gehalten sind, insbesondere durch die Verbindungsschrauben (6) geführt sind.

4. Versorgungsrinne nach einem der vorhergehenden Ansprüche, **dadurch gekennzeichnet, dass** am Grund des Kanals (3) eine sich in Längsrichtung erstreckende Leiste (7) angeordnet ist, die nach außen über den Grund hinaus vorsteht.

5. Versorgungsrinne nach einem der vorhergehenden Ansprüche, **dadurch gekennzeichnet, dass** die Leiste (7) zwischen den Laschen (5) angeordnet ist, wobei die Verbindungsschrauben (6) durch die Lasche (5) geführt sind.

6. Versorgungsrinne nach einem der vorhergehenden Ansprüche, **dadurch gekennzeichnet, dass** die Verbindungsschrauben (6) durch Festziehen eine Transportsicherung und Installationshilfe bilden und nach einer bauseitigen Installation gelöst sind.

7. Versorgungsrinne nach einem der vorhergehenden Ansprüche, **dadurch gekennzeichnet, dass** an zumindest einem Teil der Ankerlaschen (4) Abstandshalter (17) angeordnet sind, die sich in die der Abdeckung (8) abgewandte Richtung erstrecken.

8. Versorgungsrinne nach einem der vorhergehenden Ansprüche, **dadurch gekennzeichnet, dass** zumindest ein Teil der Abstandshalter (17) höhenverstellbar sind.

9. Versorgungsrinne nach einem der vorhergehenden Ansprüche, **dadurch gekennzeichnet, dass** die Abstandshalter (17) stangenförmig ausgebildet sind, wobei die höhenverstellbaren Abstandshalter (17) in einem Bereich mit Außengewinde versehen sind, zur Schraubverbindung mit der zugeordneten Ankerlasche (4).

10. Versorgungsrinne nach einem der vorhergehenden Ansprüche, **dadurch gekennzeichnet, dass** die Abstandshalter (17) jeweils an ihren freien Enden einen Flansch (18) aufweisen.

11. Versorgungsrinne nach einem der vorhergehenden Ansprüche, **dadurch gekennzeichnet, dass** im Rinnenkörper (2) zur Abstützung der sich gegenüberliegenden Seitenwände mehrere Riegel (9) angeordnet sind.

12. Versorgungsrinne nach einem der vorhergehenden Ansprüche, **dadurch gekennzeichnet, dass** die Riegel (9) lösbar an den Seitenwänden des Rinnenkörpers (2) gehalten sind.

## Claims

1. Supply channel, with a channel body (2) delimiting a channel (3) in cross-section on three sides and a cover (8) covering the channel (3), **characterized in that** the channel body (2) consists of at least two separate body parts (2') lying side by side and extending in the longitudinal direction which are detachably connected to one another by connecting elements in such a way that, by relative lateral movements with respect to one another, a clearance is formed for compensating for shrinkage of a concrete bed in which the channel body (2) is inserted, wherein angled anchor tabs (4) are fastened to the opposing outer sides of the channel body (2).

2. Supply channel according to claim 1, **characterized in that** the two body parts (2') are formed identically.

3. Supply channel according to claim 1 or 2, **characterized in that** the body parts (2') have adjacent tabs (5) angled towards the channel (3), on which the connecting elements are held, in particular guided by the connecting screws (6).

4. Supply channel according to one of the preceding claims, **characterized in that** a longitudinally extending strip (7) is arranged at the bottom of the channel (3) and projects outwardly beyond the bottom.

5. Supply channel according to one of the preceding claims, **characterized in that** the strip (7) is arranged between the tabs (5), the connecting screws (6) being guided through the tab (5).

6. Supply channel according to one of the preceding claims, **characterized in that** the connecting screws (6) form a transport lock and installation aid by tightening and are loosened after an on-site installation.

7. Supply channel according to one of the preceding claims, **characterized in that** spacers (17) are arranged on at least part of the anchor tabs (4), which spacers extend in the direction facing away from the cover (8).

8. Supply channel according to one of the preceding claims, **characterized in that** at least part of the spacers (17) are adjustable in height.

9. Supply channel according to one of the preceding claims, **characterized in that** the spacers (17) are bar-shaped, the height-adjustable spacers (17) being provided with external threads in one region, for screw connection to the associated anchor tab (4).

10. Supply channel according to one of the preceding claims, **characterized in that** the spacers (17) each have a flange (18) at their free ends.

11. Supply channel according to one of the preceding claims, **characterized in that** several bars (9) are arranged in the channel body (2) for supporting the opposing side walls.

12. Supply channel according to one of the preceding claims, **characterized in that** the bars (9) are detachably held on the side walls of the channel body (2).

## Revendications

1. Rigole d'alimentation, avec un corps de rigole (2) délimitant un canal (3) sur trois côtés en coupe transversale et avec une couverture (8) qui recouvre le canal (3), **caractérisée en ce que** le corps de rigole (2) se compose d'au moins deux parties de corps (2') séparées placées l'une à côté de l'autre et qui s'étendent dans le sens de la longueur, qui sont assemblées l'une à l'autre par des éléments d'assemblage d'une façon pouvant être défaite de sorte que des mouvements latéraux relatifs créent un jeu pour compenser une contraction d'une sole en béton dans laquelle le corps de rigole (2) est posé, des pattes d'ancrage (4) coudées étant fixées sur des faces extérieures du corps de rigole (2) qui se font face.

2. Rigole d'alimentation selon la revendication 1, **caractérisée en ce que** les deux parties de corps (2') ont une forme identique.

3. Rigole d'alimentation selon la revendication 1 ou 2, **caractérisée en ce que** les parties de corps (2') présentent des pattes (5) courbées en direction du canal (3) et voisines les unes des autres, sur lesquelles les éléments d'assemblage sont retenus et, en particulier, à travers lesquelles des vis d'assemblage (6) sont passées.

4. Rigole d'alimentation selon l'une des revendications précédentes, **caractérisée en ce qu'**est disposée sur le fond du canal (3) une bande (7) qui s'étend dans le sens de la longueur et qui dépasse au-dessus du fond vers l'extérieur.

5. Rigole d'alimentation selon l'une des revendications précédentes, **caractérisée en ce que** la bande (7) est disposée entre les pattes (5), les vis d'assemblage (6) étant passées à travers la patte (5).

6. Rigole d'alimentation selon l'une des revendications précédentes, **caractérisée en ce que** les vis d'assemblage (6) serrées forment une sécurité pour le transport et une aide à l'installation et sont desserrées après l'installation sur un bâtiment.

7. Rigole d'alimentation selon l'une des revendications précédentes, **caractérisée en ce que** des cales d'écartement (17) qui s'étendent dans la direction opposée à la couverture (8) sont disposées sur au moins une partie des pattes d'ancrage (4).

8. Rigole d'alimentation selon l'une des revendications précédentes, **caractérisée en ce qu'**une partie au moins des cales d'écartement (17) sont réglables en hauteur.

9. Rigole d'alimentation selon l'une des revendications précédentes, **caractérisée en ce que** les cales d'écartement (17) sont en forme de baguette, les cales d'écartement (17) réglables en hauteur étant munies dans une zone d'un filetage extérieur pour l'assemblage vissé avec la patte d'ancrage (4) correspondante.

10. Rigole d'alimentation selon l'une des revendications précédentes, **caractérisée en ce que** les cales d'écartement (17) présentent une bride (18) à leurs extrémités libres.

11. Rigole d'alimentation selon l'une des revendications précédentes, **caractérisée en ce que** plusieurs barres (9) sont disposées dans le corps de rigole (2) pour soutenir les parois latérales qui se font face.

12. Rigole d'alimentation selon l'une des revendications précédentes, **caractérisée en ce que** les barres (9) sont retenues d'une façon pouvant être défaite sur les parois latérales du corps de rigole (2).
